# EUROPEAN PATENT APPLICATION

(11) **EP 2 501 077 A1**
(43) Date of publication of application: **19.09.2012**
(21) Application number: 12001547.4
(22) Date of filing: 07.03.2012
(51) Int. Cl.: H04L 12/24, H04L 12/56, H04L 12/28

(54) **Convergent network topology discovery and mapping**

(30) Priority: 14.03.2011 US 201161452622 P; 14.03.2011 US 201161452627 P; 22.12.2011 US 201113334245
(71) Applicant: Broadcom Corporation, Irvine, CA 92617 (US)
(72) Inventor: Klein, Philippe, 92548 Jerusalem (IL)
(74) Representative: Jehle, Volker Armin

(57) **Abstract**

Convergent network topology discovery and mapping. A topology discovery protocol allows for the discovery of the different respective communication links within a convergent network that may become composed of any of a number of different respective network types (e.g., a local area network (LAN), wireless LAN (WLAN/WiFi), a multimedia over coax alliance (MoCA) network, a HomePlug network, and a wireless point to point (P2P) system, etc.). Such a topology discovery protocol may be implemented as a Layer 2 peer-to-peer link layer discovery protocol (LLDP). Topology discovery may be limited to neighboring nodes only (e.g., reporting information corresponding only to those nodes directly connected to a given node). Any desired device within the overall convergent network may serve as a mapper operative communication device (e.g., that device which performs the mapping service such as in accordance with generating a graph corresponding to the topology indicating of connectivity among the various communication devices).

## Description

### CROSS REFERENCE TO RELATED PATENTS/PATENT APPLICATIONS

### Provisional priority claims

The present U.S. Utility Patent Application claims priority pursuant to 35 U.S.C. § 119(e) to the following U.S. Provisional Patent Applications which are hereby incorporated herein by reference in their entirety and made part of the present U.S. Utility Patent Application for all purposes:
1. U.S. Provisional Patent Application Serial No. 61/452,622, entitled "Convergent network topology discovery and mapping," (Attorney Docket No. BP22650), filed 03-14-2011, pending.
2. U.S. Provisional Patent Application Serial No. 61/452,627, entitled "Stream path selection within convergent networks," (Attorney Docket No. BP22651), filed 03-14-2011, pending.

### Incorporation by Reference

The following U.S. Utility Patent Applications are hereby incorporated herein by reference in their entirety and made part of the present U.S. Utility Patent Application for all purposes:
1. U.S. Utility Patent Application Serial No. _, entitled "Stream path selection within convergent networks," (Attorney Docket No. BP22651), filed concurrently on _, pending.
2. U.S. Utility Patent Application Serial No. _, entitied "Convergent network architecture and path information," (Attorney Docket No. BP23101), filed concurrently on _, pending.

### Incorporation by Reference

The following IEEE standards/IEEE draft standards are hereby incorporated herein by reference in their entirety and are made part of the present U.S. Utility Patent Application for all purposes:
1. IEEE Std 802.1 ABTM - 2009 (Revision of IEEE Std 802.1 AB™ - 2005), IEEE Standard for Local and Metropolitan Area Networks - Station and Media Access Control Connectivity Discovery, IEEE Computer Society, Sponsored by the LAN/MAN Standards Committee, 17 September 2009, 204 pages.
2. IEEE P802.1Q-REV/D1.5, Mar 2011, IEEE Approved Draft Standard for Local and Metropolitan Area Networks - Media Access Control (MAC) Bridges and Virtual Bridged Local Area Networks, 29 August 2011, 1376 pages.
3. IEEE P1905.1™/D1.00, 13-December-2011, 1905_1-11-0101-00-WGDC CDHN, IEEE P1905.1™ /D01.00 Draft Standard for Convergent Digital Home Network for Heterogeneous Technologies, Sponsor: Standards Committee of the IEEE Communications Society, IEEE-SA Standards Board, Prepared by the P1905.1 Working Group of the IEEE Communications Society, 79 total pages.

### BACKGROUND OF THE INVENTION

### TECHNICAL FIELD OF THE INVENTION

The invention relates generally to communication systems; and, more particularly, it relates to convergent networks composed of any number of different respective network types.

### DESCRIPTION OF RELATED ART

Data communication systems have been under continual development for many years. One particular type of communication system is particularly related to heterogeneous networking technologies which may be implemented in accordance with home networking technologies. For example, within certain such network environments, as few as one or two or more different types of different respective network technologies may be implemented in accordance with a common abstract layer for supporting communications among such different network technologies.

As an example, different types of networks that may be implemented within such a heterogeneous networking technology environment may be varied. In addition, while it is noted that such different types of networks may be implemented within such a heterogeneous networking technology environment, the present art does not provide a means by which different respective networks may operate effectively and seamlessly with respect to another. For example, within any one respective network, there may be multiple respective communication links therein. Moreover, different respective networks may interface with respect to one another at more than one node or point.

The prior art fails to provide for effective operation of such heterogeneous networking technologies in regards to a number of issues including considerations such as network management, neighbor discovery, topology discovery, path selection, network control and management. While research and development continues in attempts to address these and other deficiencies within such convergent networks employing heterogeneous technologies, the prior art does not adequately provide acceptable solutions to allow for high levels of performance and broad implementation of such convergent networks.

### BRIEF SUMMARY OF THE INVENTION

According to an aspect, an apparatus is provided, comprising:
an input for receiving a plurality of messages from a plurality of communication devices including a plurality of bridges and a plurality of end stations, each of the plurality of messages in accordance with a Layer 2 peer to peer link layer discovery protocol (LLDP) and corresponding to connectivity from a respective one of the plurality of communication devices to neighboring communication devices connected to the respective one of the plurality of communication devices via a respective direct communication link;
a processing module for:
   processing the plurality of messages thereby determining a topology indicating connectivity among the plurality of communication devices;
   generating a graph corresponding to the topology indicating of connectivity among the plurality of communication devices; and
   an output for transmitting the graph to at least one of the plurality of communication devices.

Advantageously:
at least one of the plurality of bridges receiving at least one of the plurality of messages from at least one of the plurality of communication devices connected to the bridge via a direct communication link and forwarding the at least one of the plurality of messages to the apparatus.

Advantageously:
the apparatus for receiving the plurality of messages only from the plurality of bridges; and
each of the plurality of bridges for:
   receiving a respective plurality of LLDP messages from those of the plurality of end stations connected thereto via a plurality of respective direct communication links; and
   multicasting the respective plurality of LLDP messages to the apparatus.

Advantageously:
the apparatus being an end station or a bridge.

Advantageously:
the apparatus and the plurality of communication devices implemented within a convergent network including a combination of at least two respective network types corresponding to a wireless local area network (WLAN/WiFi), a multimedia over coax alliance (MoCA) network, a local area network (LAN), a HomePlug network, and a wireless point to point (P2P) system.

According to an aspect, an apparatus comprises:
an input for receiving a plurality of messages from a plurality of communication devices, each of the plurality of messages corresponding to connectivity from a respective one of the plurality of communication devices to neighboring communication devices connected to the respective one of the plurality of communication devices via a respective direct communication link; and
a processing module for processing the plurality of messages thereby determining a topology indicating connectivity among the plurality of communication devices.

Advantageously:
at least one of the plurality of communication devices being a bridge; and
the bridge receiving at least one of the plurality of messages from at least one of the plurality of communication devices connected to the bridge via a direct communication link and forwarding the at least one of the plurality of messages to the apparatus.

Advantageously:
the plurality of messages being in accordance with a Layer 2 peer to peer link layer discovery protocol (LLDP).

Advantageously:
the plurality of communication devices including a plurality of bridges and a plurality of end stations;
the apparatus for receiving the plurality of messages only from the plurality of bridges; and
each of the plurality of bridges for:
   receiving a respective plurality of link layer discovery protocol (LLDP) messages from those of the plurality of end stations connected thereto via a plurality of respective direct communication links; and
   multicasting the respective plurality of LLDP messages to the apparatus.

Advantageously:
the plurality of communication devices including a plurality of bridges and a plurality of end stations; and
the apparatus being an end station.

Advantageously:
the plurality of communication devices including a plurality of bridges and a plurality of end stations; and
the apparatus being a bridge.

Advantageously:
the processing module for generating a graph corresponding to the topology indicating of connectivity among the plurality of communication devices; and further comprising:
   an output for transmitting the graph to at least one of the plurality of communication devices.

Advantageously:
the apparatus and the plurality of communication devices implemented within a convergent network including a combination of at least two respective network types corresponding to a wireless local area network (WLAN/WiFi), a multimedia over coax alliance (MoCA) network, a local area network (LAN), a HomePlug network, and a wireless point to point (P2P) system.

According to an aspect, a method is provided for operating a mapper operative communication device, comprising:
via an input, receiving a plurality of messages from a plurality of communication devices, each of the plurality of messages corresponding to connectivity from a respective one of the plurality of communication devices to neighboring communication devices connected to the respective one of the plurality of communication devices via a respective direct communication link; and
processing the plurality of messages thereby determining a topology indicating connectivity among the plurality of communication devices.

Advantageously:
at least one of the plurality of communication devices being a bridge; and further comprising:
   operating the bridge for receiving at least one of the plurality of messages from at least one of the plurality of communication devices connected to the bridge via a direct communication link and forwarding the at least one of the plurality of messages to the apparatus.

Advantageously:
the plurality of messages being in accordance with a Layer 2 peer to peer link layer discovery protocol (LLDP).

Advantageously:
the plurality of communication devices including a plurality of bridges and a plurality of end stations; and further comprising:
   operating the mapper operative communication device for receiving the plurality of messages only from the plurality of bridges; and
   operating each of the plurality of bridges for:
      receiving a respective plurality of link layer discovery protocol (LLDP) messages from those of the plurality of end stations connected thereto via a plurality of respective direct communication links; and
      multicasting the respective plurality of LLDP messages to the mapper operative communication device.

Advantageously:
the plurality of communication devices including a plurality of bridges and a plurality of end stations; and
the mapper operative communication device being an end station or a bridge.

Advantageously, the method further comprises:
generating a graph corresponding to the topology indicating of connectivity among the plurality of communication devices; and further comprising:
   via an output, transmitting the graph to at least one of the plurality of communication devices.

Advantageously:
the mapper operative communication device and the plurality of communication devices implemented within a convergent network including a combination of at least two respective network types corresponding to a wireless local area network (WLAN/WiFi), a multimedia over coax alliance (MoCA) network, a local area network (LAN), a HomePlug network, and a wireless point to point (P2P) system.

### BRIEF DESCRIPTION OF THE SEVERAL VIEWS OF THE DRAWINGS

FIG. 1, FIG. 2, FIG. 3, and FIG. 4 illustrate various embodiments of communication systems.
FIG. 5 illustrates an embodiment of a topology discovery protocol.
FIG. 6 illustrates an embodiment of topology mapper messages.
FIG. 7A, FIG. 7B, FIG. 7C, FIG. 8A, and FIG. 8B illustrate various embodiment of methods for operating one or more devices within a convergent network.

### DETAILED DESCRIPTION OF THE INVENTION

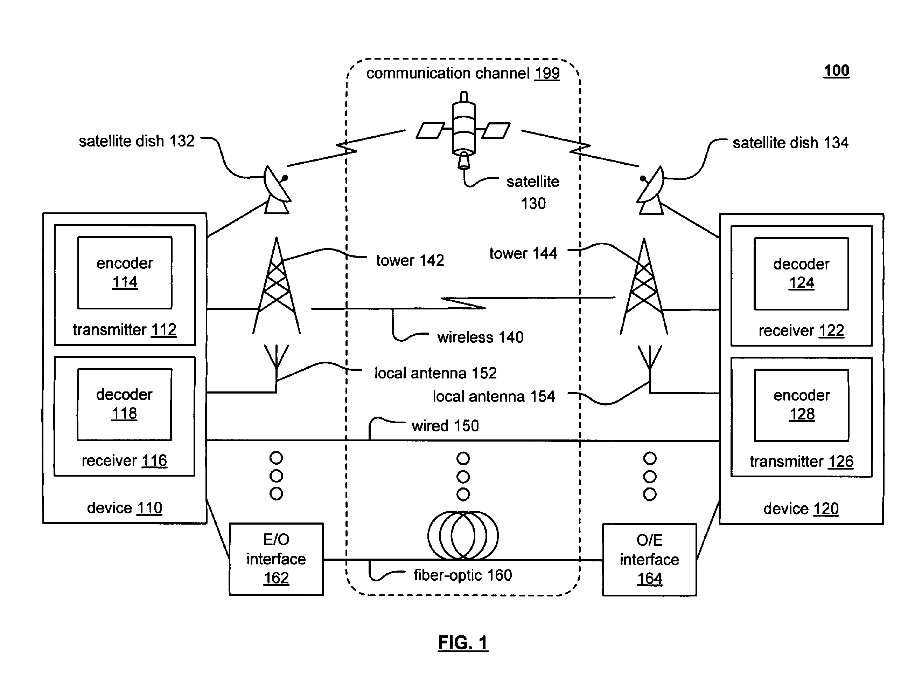

Within communication systems, signals are transmitted between various communication devices therein. The goal of digital communications systems is to transmit digital data from one location, or subsystem, to another either error free or with an acceptably low error rate. As shown in FIG. 1, data may be transmitted over a variety of communications channels in a wide variety of communication systems: magnetic media, wired, wireless, fiber, copper, and other types of media as well.

FIG. 1, FIG. 2, FIG. 3, and FIG. 4 illustrate various embodiments of communication systems, 100, 200, 300, and 400, respectively.

Referring to FIG. 1, this embodiment of a communication system 100 is a communication channel 199 that communicatively couples a communication device 110 (including a transmitter 112 having an encoder 114 and including a receiver 116 having a decoder 118) situated at one end of the communication channel 199 to another communication device 120 (including a transmitter 126 having an encoder 128 and including a receiver 122 having a decoder 124) at the other end of the communication channel 199. In some embodiments, either of the communication devices 110 and 120 may only include a transmitter or a receiver. There are several different types of media by which the communication channel 199 may be implemented (e.g., a satellite communication channel 130 using satellite dishes 132 and 134, a wireless communication channel 140 using towers 142 and 144 and/or local antennae 152 and 154, a wired communication channel 150, and/or a fiber-optic communication channel 160 using electrical to optical (E/O) interface 162 and optical to electrical (O/E) interface 164)). In addition, more than one type of media may be implemented and interfaced together thereby forming the communication channel 199.

To reduce transmission errors that may undesirably be incurred within a communication system, error correction and channel coding schemes are often employed. Generally, these error correction and channel coding schemes involve the use of an encoder at the transmitter end of the communication channel 199 and a decoder at the receiver end of the communication channel 199.

Any of various types of ECC codes described can be employed within any such desired communication system (e.g., including those variations described with respect to FIG. 1), any information storage device (e.g., hard disk drives (HDDs), network information storage devices and/or servers, etc.) or any application in which information encoding and/or decoding is desired.

Generally speaking, when considering a communication system in which video data is communicated from one location, or subsystem, to another, video data encoding may generally be viewed as being performed at a transmitting end of the communication channel 199, and video data decoding may generally be viewed as being performed at a receiving end of the communication channel 199.

Also, while the embodiment of this diagram shows bi-directional communication being capable between the communication devices 110 and 120, it is of course noted that, in some embodiments, the communication device 110 may include only video data encoding capability, and the communication device 120 may include only video data decoding capability, or vice versa (e.g., in a uni-directional communication embodiment such as in accordance with a video broadcast embodiment).

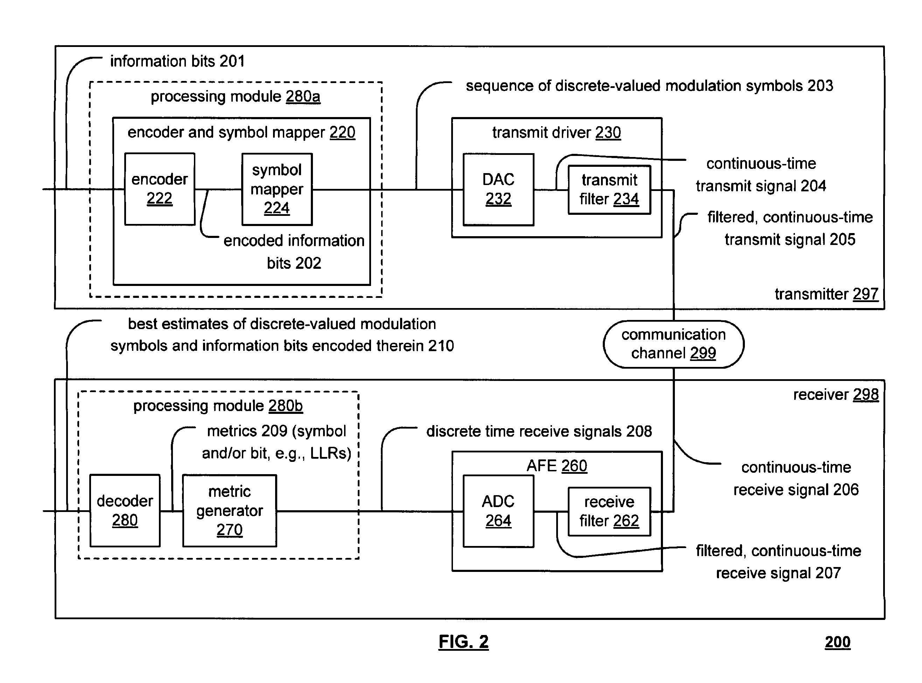

Referring to the communication system 200 of FIG. 2, at a transmitting end of a communication channel 299, information bits 201 (e.g., corresponding particularly to video data in one embodiment) are provided to a transmitter 297 that is operable to perform encoding of these information bits 201 using an encoder and symbol mapper 220 (which may be viewed as being distinct functional blocks 222 and 224, respectively) thereby generating a sequence of discrete-valued modulation symbols 203 that is provided to a transmit driver 230 that uses a DAC (Digital to Analog Converter) 232 to generate a continuous-time transmit signal 204 and a transmit filter 234 to generate a filtered, continuous-time transmit signal 205 that substantially comports with the communication channel 299. At a receiving end of the communication channel 299, continuous-time receive signal 206 is provided to an AFE (Analog Front End) 260 that includes a receive filter 262 (that generates a filtered, continuous-time receive signal 207) and an ADC (Analog to Digital Converter) 264 (that generates discrete-time receive signals 208). A metric generator 270 calculates metrics 209 (e.g., on either a symbol and/or bit basis) that are employed by a decoder 280 to make best estimates of the discrete-valued modulation symbols and information bits encoded therein 210.

Within each of the transmitter 297 and the receiver 298, any desired integration of various components, blocks, functional blocks, circuitries, etc. Therein may be implemented. For example, this diagram shows a processing module 280a as including the encoder and symbol mapper 220 and all associated, corresponding components therein, and a processing module 280 is shown as including the metric generator 270 and the decoder 280 and all associated, corresponding components therein. Such processing modules 280a and 280b may be respective integrated circuits. Of course, other boundaries and groupings may alternatively be performed without departing from the scope and spirit of the invention. For example, all components within the transmitter 297 may be included within a first processing module or integrated circuit, and all components within the receiver 298 may be included within a second processing module or integrated circuit. Alternatively, any other combination of components within each of the transmitter 297 and the receiver 298 may be made in other embodiments.

As with the previous embodiment, such a communication system 200 may be employed for the communication of video data is communicated from one location, or subsystem, to another (e.g., from transmitter 297 to the receiver 298 via the communication channel 299).

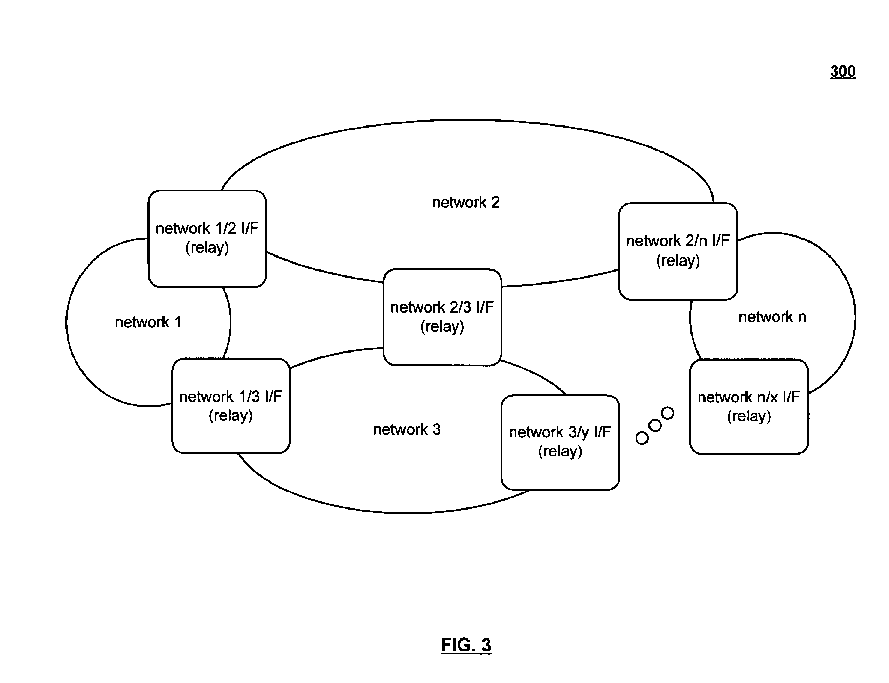

Referring to the embodiment 300 of FIG. 3, such a communication system may generally be viewed as including multiple networks that can interface with each other. Generally speaking, such an embodiment 300 can include a network 1, a network 2, a network 3, and so on up to a network n (e.g., where n is an integer). Such an overall communication system, composed of multiple networks, can generally be referred to as a convergent network (e.g., in which multiple networks are converged with one another thereby generating or forming a larger communication system, namely, a convergent network).

To interface communications between the respective networks, certain interfaces (e.g., relays) may be implemented within certain communication devices that are operative to communication with at least two of the types of network. In some embodiments, a given communication device may include functionality to interface with more than two networks (e.g., 3 networks, 4, networks, etc.). As may be seen in the diagram, an interface by which communications are made between two of the networks is via a network interface (or relay). As some specific examples, communications made between network 1 and network 2 are made via network 1/2 interface (or relay); communications made between network 1 and network 3 are made via network 1/3 interface (or relay); communications made between network n and network x are made via network n/x interface (or relay); and so on.

Generally speaking, for a communication device to support communications with more than one network will typically result in greater functionality and/or complexity of such a communication device. In some embodiments, a given communication device includes functionality to interface with and support communications with, at most, two of the networks within the overall communication system or convergent network.

Of course, some of the communication devices therein only include functionality to interface with and support communications with one of the networks within the overall communication system or convergent network. When such a communication device (e.g., one including functionality to interface with and support communications with one of the networks) communicates with another communication device including functionality to interface with and support communications with another one of the networks, such communications are made via at least one interface (or relay) by which communications are made from one network to another.

The types of networks that the networks 1 to n may represent may be varied. For examples, such networks may be wired networks, wireless network, optical networks, cellular networks, satellite networks, power line based networks, etc. Of course, certain of these networks may not only operate in accordance with different types of media (e.g., wired, wireless [air], optical, etc.), but certain of these networks may operate in accordance with different communication standards, protocols, and/or recommended practices.

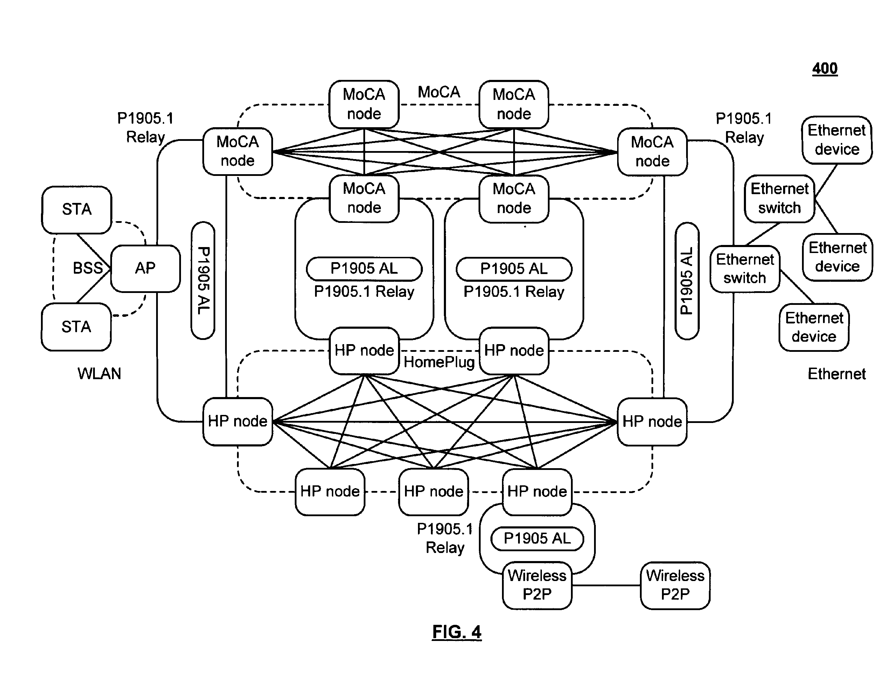

Referring to the embodiment 400 of FIG. 4, such a communication system is a convergent network including interfacing and supporting of communications between various types of communication networks. This diagram particularly depicts a wireless local area network (WLAN/WiFi), a multimedia over coax alliance (MoCA®, or generally referred to as MoCA) network, a local area network (LAN) such as one that operates in accordance with Ethernet or in accordance with IEEE 802.3, a HomePlug network (e.g., a communication network operating in accordance with various power line communication standards, protocols, and/or recommended practices and can operate using power system related hardware and infrastructure), and/or a wireless point to point (P2P) system (shown as Wireless P2P in the diagram).

Various communication devices are operative to support communications with more than one of these various network types within the overall communication system or convergent network. Such communication devices may generally be referred to as relays that perform the appropriate conversion, transcoding, interfacing, etc. of signals received from and compliant with a first type of network in accordance with generating signals compliant with a second type of network; such a relay then forwards the newly generated signal via the second type of network. It is also noted that such relay functionality may be included within any desired communication device within the convergent network. While certain relays may be dedicated relays within the convergent network, any such type of communication device within the convergent network may include such relaying or interfacing functionality therein.

Of course, certain communications may be transmitted across multiple network interfaces and, as such, may undergo appropriate processing in accordance with more than one relay (e.g., from a first type of network to a second type of network, then from the second type of network to a third second type of network, etc.).

In certain communication devices that includes such relaying or interfacing functionality therein, a P1905.1 Layer may be implemented above the respective media access control (MAC) layers corresponding to two or more network types. For example, a P1905.1 Layer may be implemented above a first MAC layer corresponding to a WLAN and also above a second MAC layer corresponding to a MoCA network. Alternatively, a P1905.1 Layer may be implemented above a first MAC layer corresponding to a LAN or Ethernet network and also above a second MAC layer corresponding to a HomePlug network. Generally, for a relay device, such a P1905.1 Layer may be implemented above at least two MAC layers corresponding respectively to at least two types of networks within the convergent network. Of course, for a terminal device (e.g., one not implemented to effectuate relaying of frames between two or more interfaces), such a P1905.1 Layer may be implemented over a single MAC layer corresponding to one of the types of networks within the convergent network. In some embodiments, such a terminal device may also be implemented using a P1905.1 layer to allow the device to be seen as a P1905.1 device and to be controlled by the P1905.1 network management entity in accordance with a P1905.1 control protocol (e.g., so that the device will not be seen as a legacy device in the convergent network).

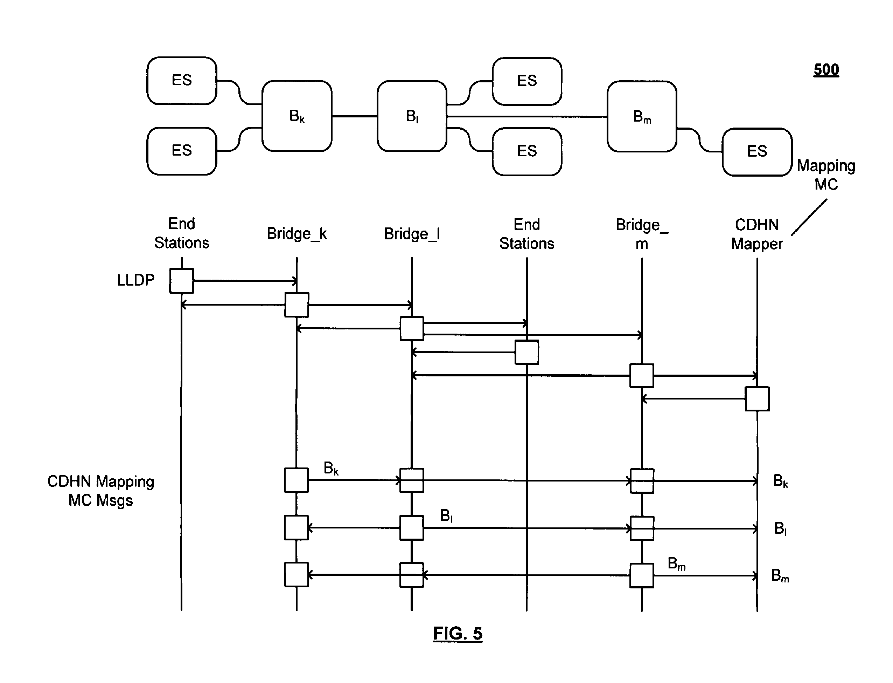

FIG. 5 illustrates an embodiment 500 of a topology discovery protocol. In this diagram, a number of end stations (ESs) are shown as being operative to support communications there between via various bridges (shown as Bₖ, Bₗ, and Bₘ). Within a communication system such as a convergent network as described herein, it is appropriate to determine the network topology. A novel protocol is presented herein by which the topology of a convergent network (e.g., a convergent digital home network (CDHN)) may be discovered and mapped. Generally speaking, the topology discovery protocol operating in accordance with the principles and aspects presented herein can operate in accordance with and over a link layer discovery protocol (LLDP).

Such a convergent digital home network (CDHN) may be compliant in accordance with P1905.1. Generally speaking, a P1905.1 Converged Home Network may be viewed as a Layer 2 bridged network. The link layer discovery protocol (LLDP) (IEEE Std 802.1AB™) specified in IEEE Std 802.1AB™ can be employed, at least in part, but operation in accordance with the LLDP may be limited to the topology discovery of neighboring nodes only within the overall convergent network.

While there are some discovery protocols existent in the prior art (e.g., Apple's Bonjour, Microsoft LLT (Link Layer Topology Discovery), Device PnP, etc.), however, such prior art approaches and discovery protocols are typically proprietary or are not Layer 2 protocols (e.g., they are not compliant or operative in accordance with Layer 2).

In accordance with the various communication devices of a convergent network, the respective communication devices therein are operative to discover neighboring nodes in accordance with LLDP (e.g., IEEE Std 802.1AB™). In other words, each of the communication devices is operative to acquire information related to those other communication devices located as neighboring nodes within the convergent network. Generally speaking, each communication device within the convergent network is operative to advertise to its immediate neighbors. Neighboring communication devices may be viewed as those communication devices with which a first communication device can communicate via a single communication link (e.g., a communication link connecting to the first communication device on one end and another communication device on another end).

One of the communication devices within the system (e.g., as selected by a designer, etc.) is operative as a mapper device, which may be referred to as a CDHN mapper device. That is to say, at least one of the communication devices within the convergent network is operative as a mapping device that receives or collects information from all of the communication devices within the convergent network. Information related to the neighboring node connectivity of each respective communication device is bridged (such as via a multi-cast communications) to the mapper device. That is to say, when a bridge communication device receives information from another communication device regarding the neighboring communication devices of that other communication device, the bridge communication device is operative to re-broadcast that information on so that it eventually is received by the mapper device. Stated another way, when a bridge communication device receives information from a given communication device related to the neighboring communication devices of that given communication device, the bridge forwards such information on to the mapper device.

The mapper device is operative to employ this information related to all of the neighboring communication devices that are operative to communicate with other communication devices within the convergent network. The mapper device is operative to create the graph of the entire convergent network based on this received information.

Generally speaking, the mapper device can be situated anywhere within the convergent network and in any desired communication device within the convergent network. Such operations and functionality of convergent network topology discovery and mapping can be included in an application layer within a communication device. In even other embodiments, the mapper device can be located outside of a portion of the convergent network located within a home, business, etc. For example, an entire convergent network may be viewed as including a first portion located within a home, business, etc., and at least one other portion located outside of that home, business, etc. The mapper device could be a remotely located communication device that is operative to communicate with the convergent network, yet that is not particularly located within a portion of the convergent network that is located within a home, business, etc.

Such a mapper device also is operative to serve as a diagnostic and management functioning device. In some embodiments, the mapper device is operative to communicate the determined topology (e.g., such as in a graph format) to at least one other communication device within the convergent network. In some instances, a home network (e.g., a convergent digital home network (CDHN)) may be serviced or checked from a remote location (e.g., such as by a service provider). Having appropriate information related to the topology of the convergent network can be a valuable source of information in regards to trouble-shooting and diagnostic operations with respect to the convergent network.

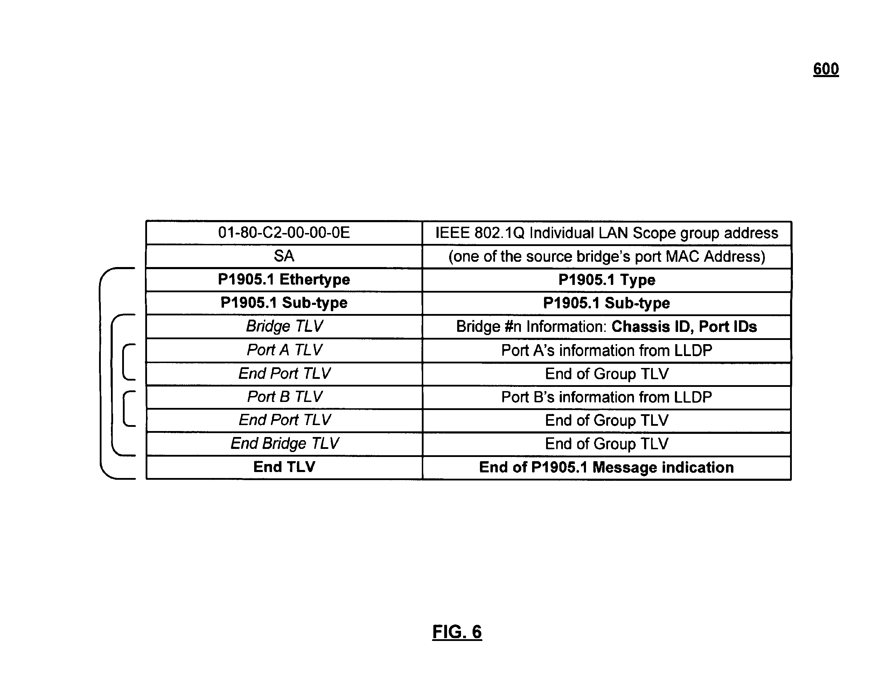

FIG. 6 illustrates an embodiment of topology mapper messages. The topology mapper messages in accordance with such functionality as described herein may be implemented in one possible embodiment as depicted in the diagram. A signaling convention to TLV (type, length, value) can be employed to allow communications between the various communication devices within the convergent network to be concatenated with one another whereas each respective communication device need not know all of the details of each and every message within that concatenated communication.

For example, if a given message does not correspond to a type that a given receiver communication device can process, that message may be ignored and the receiver communication device can move to the next message within the concatenated communication to determine if that next message is of a type that the given receiver communication device can process, and so on. As may be seen, those messages that do are not of a type that the given receiver communication device can process and/or are not intended for that given receiver communication device do not get processed but are instead passed over by the receiver communication device.

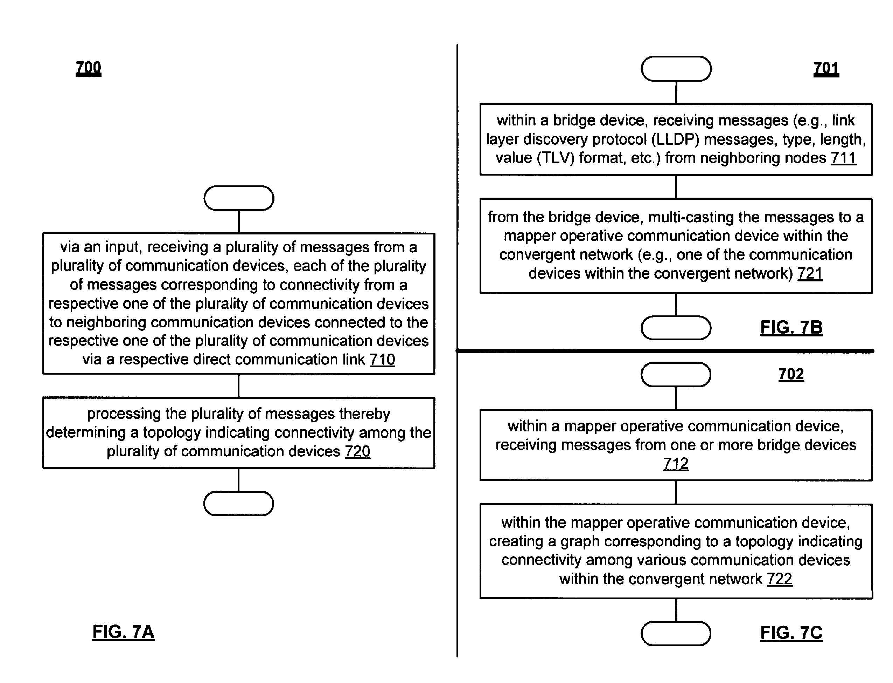

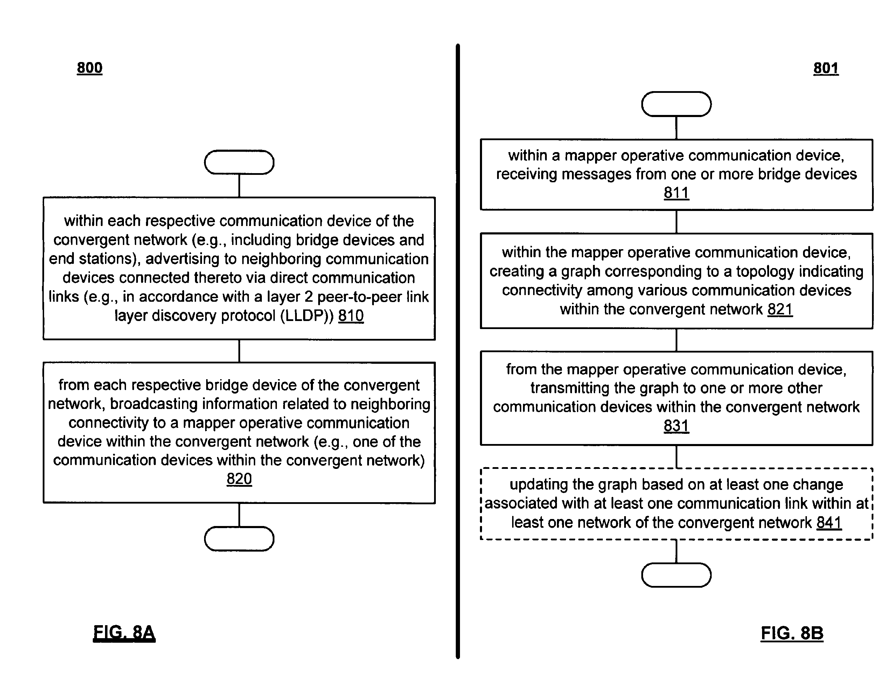

FIG. 7A, FIG. 7B, FIG. 7C, FIG. 8A, and FIG. 8B illustrate various embodiment of methods for operating one or more devices within a convergent network.

Referring to method 700 of FIG. 7A, the method 700 may be viewed, from certain perspectives as being performed within a mapper operative communication device. While different respective nodes, devices, etc. within such a convergent network may be of any number of different types of devices (e.g. talker or source device, listener or destination device, middling node, relay, etc.), the method 700 may be viewed as any such device implemented as having or including mapping capability.

Via an input (e.g., of a mapper operative to mapper operative device), the method 700 begins by receiving a plurality of messages from a plurality of communication devices, each of the plurality of messages corresponding to connectivity from a respective one of the plurality of communication devices to neighboring communication devices connected to the respective one of the plurality of communication devices via a respective direct communication link, as shown in a block 710. As described elsewhere herein, such connectivity as corresponding to neighboring communication devices may be limited to those communication devices to which any one given communication device is connected via a direct communication link.

The method 700 continues by processing the plurality of messages thereby determining a topology indicating connectivity among the plurality of communication devices, as shown in a block 720. As mentioned above, such a mapper operative communication device may be any of a number of different types of devices. In some instances, one of the devices within such a convergent network is a bridge that includes capabilities for receiving respective messages and forwarding them on to other devices within the convergent network (e.g., forwarding on such messages to a mapper operative communication device).

Referring to method 701 of FIG. 7B, the method may be viewed, from certain perspectives as being performed within a bridge device. For example, within such a bridge device, the method 701 begins by receiving messages from one or more neighboring nodes within the convergent network, as shown in a block 711. For example, such messages may be compliant with or implemented as link layer discovery protocol (LLDP) messages and/or messages having the format of TLV (type, length, value format). B

The method 701 then operates by multicasting the messages to a mapper operative communication device within the convergent network, as shown in a block 721. The operations of the block 721 including the multicasting of the messages may be effectuated from the bridge device. As stated elsewhere herein, it is noted that such a mapper operative communication device may be any desired communication device within the overall convergent network.

Referring to method 702 of FIG. 7C, the method 702 may be viewed, from certain perspectives as being performed within a mapper operative communication device. Within such a mapper operative communication device, the method 702 operates by receiving messages from one or more bridge devices, as shown in a block 712. Then, within the mapper operative communication device, the method 702 operates by creating a graph corresponding to a topology indicating connectivity among various communication devices within the convergent network, as shown in a block 722.

Referring to method 800 of FIG. 8A, the method 800 begins by advertising to neighboring communication devices respective connectivity, as shown in a block 810. The operations of the blockade 10 may be viewed as being performed within each respective communication device of a given convergent network (e.g., including bridge devices and end stations, generally, as including all of the respective communication devices within the convergent network). Such advertising may be made to neighboring communication device is connected to anyone given communication device via a direct communication link. Such advertising of connectivity may be effectuated in accordance with a layer 2 peer-to-peer link layer discovery protocol (LLDP).

The method 800 continues by broadcasting information related to neighboring connectivity to a mapper operative communication device within the convergent network, as shown in a block 820. Such operations as associated with the blockade 20 may be viewed as being associated with broadcasting such information from each respective bridge device of the convergent network. Again, the mapper operative communication device may be viewed as being any one of the respective communication devices within the convergent network.

Referring to method 801 of FIG. 8B, the method 801 begins by the method 801 may be viewed, from certain perspectives as being performed within a mapper operative communication device. Within such a mapper operative to communication device, the metadata one operates by receiving messages from one or more bridge devices, as shown in a block 811. The method 801 continues by creating a graph corresponding to a topology indicating connectivity among the various communication devices within the convergent network, as shown in a block 821. The generation or creation of such a graph may be performed within the mapper operative communication device within the convergent network.

From the mapper operative communication device, the method 801 also operates by transmitting the graph to one or more other communication devices within the convergent network, as shown in a block 811. For example, while creation or generation of such a grass may be performed within a designated mapper operative communication device within the overall convergent network, there may be instances in which the grass may be used by or useful for operation of one or more other communication devices within the convergent network. In such instances, the mapper operative communication device may serve not only as a device that creates or generate such a graph, but also as one that communicates such a graph to other communication device is within the convergent network.

In certain desired embodiments, the method 801 also operates by updating the graph based on at least one change associated with at least one communication link within at least one network of the convergent network, as shown in a block 841. For example, there may be some instances in which one or more of the communication links within any one or more of the respective and separate networks within the overall convergent network change over time. In some instances, a communication link may become nonexistent entirely (e.g., a communication link is completely lost). In other situations, a communication link may either degrade or improve with respect to its ability to support communications between two respective nodes within anyone given network of the convergent network or between two respective networks within the convergent network (e.g., at a network connection point such as via a relay).

In some embodiments, such a processing module (which may be implemented in the same device or separate devices) can perform such processing to generate signals for transmission using at least one of any number of radios and at least one of any number of antennae to another wireless communication device (e.g., which also may include at least one of any number of radios and at least one of any number of antennae) in accordance with various aspects of the invention, and/or any other operations and functions as described herein, etc. or their respective equivalents. In some embodiments, such processing is performed cooperatively by a first processing module in a first device, and a second processing module within a second device. In other embodiments, such processing is performed wholly by a processing module (e.g., such as implemented within a singular device).

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" (e.g., including various modules and/or circuitries such as may be operative, implemented, and/or for encoding, for decoding, for baseband processing, etc.) may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory (ROM), random access memory (RAM), volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.

While particular combinations of various functions and features of the present invention have been expressly described herein, other combinations of these features and functions are likewise possible. The present invention is not limited by the particular examples disclosed herein and expressly incorporates these other combinations.

## Claims

1. An apparatus, comprising:
an input for receiving a plurality of messages from a plurality of communication devices including a plurality of bridges and a plurality of end stations, each of the plurality of messages in accordance with a Layer 2 peer to peer link layer discovery protocol (LLDP) and corresponding to connectivity from a respective one of the plurality of communication devices to neighboring communication devices connected to the respective one of the plurality of communication devices via a respective direct communication link;
a processing module for:
processing the plurality of messages thereby determining a topology indicating connectivity among the plurality of communication devices;
generating a graph corresponding to the topology indicating of connectivity among the plurality of communication devices; and
an output for transmitting the graph to at least one of the plurality of communication devices.

2. The apparatus of claim 1, wherein:
at least one of the plurality of bridges receiving at least one of the plurality of messages from at least one of the plurality of communication devices connected to the bridge via a direct communication link and forwarding the at least one of the plurality of messages to the apparatus.

3. The apparatus of claim 1, wherein:
the apparatus for receiving the plurality of messages only from the plurality of bridges; and
each of the plurality of bridges for:
receiving a respective plurality of LLDP messages from those of the plurality of end stations connected thereto via a plurality of respective direct communication links; and
multicasting the respective plurality of LLDP messages to the apparatus.

4. The apparatus of claim 1, wherein:
the apparatus being an end station or a bridge.

5. The apparatus of clam 1, wherein:
the apparatus and the plurality of communication devices implemented within a convergent network including a combination of at least two respective network types corresponding to a wireless local area network (WLAN/WiFi), a multimedia over coax alliance (MoCA) network, a local area network (LAN), a HomePlug network, and a wireless point to point (P2P) system.

6. An apparatus, comprising:
an input for receiving a plurality of messages from a plurality of communication devices, each of the plurality of messages corresponding to connectivity from a respective one of the plurality of communication devices to neighboring communication devices connected to the respective one of the plurality of communication devices via a respective direct communication link; and
a processing module for processing the plurality of messages thereby determining a topology indicating connectivity among the plurality of communication devices.

7. The apparatus of claim 6, wherein:
at least one of the plurality of communication devices being a bridge; and
the bridge receiving at least one of the plurality of messages from at least one of the plurality of communication devices connected to the bridge via a direct communication link and forwarding the at least one of the plurality of messages to the apparatus.

8. The apparatus of claim 6, wherein:
the plurality of messages being in accordance with a Layer 2 peer to peer link layer discovery protocol (LLDP).

9. The apparatus of claim 6, wherein:
the plurality of communication devices including a plurality of bridges and a plurality of end stations;
the apparatus for receiving the plurality of messages only from the plurality of bridges; and
each of the plurality of bridges for:
receiving a respective plurality of link layer discovery protocol (LLDP) messages from those of the plurality of end stations connected thereto via a plurality of respective direct communication links; and
multicasting the respective plurality of LLDP messages to the apparatus.

10. The apparatus of claim 6, wherein:
the plurality of communication devices including a plurality of bridges and a plurality of end stations; and
the apparatus being an end station.

11. The apparatus of claim 6, wherein:
the plurality of communication devices including a plurality of bridges and a plurality of end stations; and
the apparatus being a bridge.

12. The apparatus of claim 6, wherein:
the processing module for generating a graph corresponding to the topology indicating of connectivity among the plurality of communication devices; and further comprising:
an output for transmitting the graph to at least one of the plurality of communication devices.

13. The apparatus of claim 6, wherein:
the apparatus and the plurality of communication devices implemented within a convergent network including a combination of at least two respective network types corresponding to a wireless local area network (WLAN/WiFi), a multimedia over coax alliance (MoCA) network, a local area network (LAN), a HomePlug network, and a wireless point to point (P2P) system.

14. A method for operating a mapper operative communication device, comprising:
via an input, receiving a plurality of messages from a plurality of communication devices, each of the plurality of messages corresponding to connectivity from a respective one of the plurality of communication devices to neighboring communication devices connected to the respective one of the plurality of communication devices via a respective direct communication link; and
processing the plurality of messages thereby determining a topology indicating connectivity among the plurality of communication devices.

15. The method of claim 14, wherein:
at least one of the plurality of communication devices being a bridge; and further comprising:
operating the bridge for receiving at least one of the plurality of messages from at least one of the plurality of communication devices connected to the bridge via a direct communication link and forwarding the at least one of the plurality of messages to the apparatus.
